# EUROPÄISCHE PATENTANMELDUNG

(11) **EP 3 508 421 A1**
(43) Veröffentlichungstag der Anmeldung: **10.07.2019**
(21) Anmeldenummer: 18150763.3
(22) Anmeldetag: 09.01.2018
(51) Int. Cl.: B64C 27/10, A63H 27/00, B64C 39/02

(54) **HELIKOPTER-ANTRIEB UND VERFAHREN ZUM BETREIBEN EINES HELIKOPTER-ANTRIEBS**

(71) Anmelder: Microdrones GmbH, 57078 Siegen (DE)
(72) Erfinder: Jürss, Udo, 57078 Siegen (DE)
(74) Vertreter: Glawe, Delfs, Moll

(57) **Zusammenfassung**

Helikopter-Antrieb mit einer Rotorachse (16), die über ein Schwenklager (18) an einem Rahmen (19) aufgehängt ist. Ein Rotor (14) ist bezogen auf die Rotorachse (16) drehbar gelagert. Ein Motor (20) ist dazu ausgelegt, den Rotor (14) in Drehung zu versetzen. Ein Aktor (21, 22), der sich zwischen dem Rahmen (19) und der Rotorachse (16) erstreckt, ist ausgelegt, die Ausrichtung der Rotorachse (16) zu ändern. Die Erfindung betrifft außerdem ein Verfahren zum Steuern eines Helikopter-Antriebs.

## Beschreibung

Die Erfindung betrifft einen Helikopter-Antrieb und ein Verfahren zum Betreiben eines Helikopter-Antriebs.

Bei einem Fluggerät, das mit einem solchen Helikopter-Antrieb ausgestattet ist, werden einer oder mehrere Rotoren in Drehung versetzt, so dass durch den aerodynamischen Auftrieb der Rotoren die Gewichtskraft des Fluggeräts überwunden wird und das Fluggerät fliegt.

Um das Fluggerät in der Luft steuern zu können, kann eine Steuerungsvorrichtung vorgesehen sein. Eine Möglichkeit ist, den Anstellwinkel der Rotorblätter während eines Umlaufs des Rotors zu variieren, um Vortrieb in eine bestimmte Richtung zu erzeugen. Dies ist mechanisch aufwendig und verursacht einen hohen Wartungsaufwand. Bei einer anderen Variante werden einstellbare Luftleitbleche in dem von dem Rotor erzeugten Luftstrom angeordnet. Indem die Ausrichtung eines solchen Luftleitblechs geändert wird, kann der Luftstrom umgelenkt werden und damit ein Vortrieb in eine bestimmte Richtung erzeugt werden. Auch dies ist mechanisch aufwendig. Luftleitbleche haben zudem den Nachteil, dass sie eine große Angriffsfläche für den Wind bieten, wodurch die Flugstabilität beeinträchtigt werden kann.

Der Erfindung liegt die Aufgabe zugrunde, einen Helikopter-Antrieb und ein Verfahren zum Betreiben eines Helikopter-Antriebs vorzustellen, so dass bei einfachem Aufbau eine Steuerung eines Fluggeräts möglich ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Der erfindungsgemäße Helikopter-Antrieb umfasst eine Rotorachse, die über ein Schwenklager an einem Rahmen aufgehängt ist. Ein Rotor ist drehbar zu der Rotorachse gelagert. Ein Motor ist dazu ausgelegt, den Rotor in Drehung zu versetzen. Ein Aktor erstreckt sich zwischen dem Rahmen und der Rotorachse und ist dazu ausgelegt, die Ausrichtung der Rotorachse zu ändern.

Die Erfindung hat erkannt, dass es durch Schwenken der Rotorachse möglich ist, einem Fluggerät Vortrieb in eine bestimmte Richtung zu verleihen. Erforderlich sind lediglich eine schwenkbare Rotorachse sowie ein auf die Rotorachse wirkender Aktor, so dass bei dem erfindungsgemäßen Helikopter-Antrieb mit wenigen beweglichen Teilen eine Steuervorrichtung verwirklicht werden kann.

Das Schwenklager zwischen der Rotorachse und dem Rahmen kann eine Schwenkachse aufweisen, die mit der Rotorachse einen rechten Winkel einschließt. Die Schwenkachse kann parallel zu einer Längsrichtung oder parallel zu einer Querrichtung des Fluggeräts ausgerichtet sein. Wird die Rotorachse um eine zu der Längsachse des Fluggeräts parallele Schwenkachse geschwenkt, so kann damit eine Rollbewegung des Fluggeräts ausgelöst werden, mit der das Fluggerät um seine Längsachse gekippt wird. Wird die Rotorachse um eine zu der Querachse des Helikopters parallele Schwenkachse geschwenkt, so kann damit eine Nickbewegung des Fluggeräts ausgelöst werden, mit der das Fluggerät um seine Querachse gekippt wird.

Soll der Helikopter-Antrieb in der Lage sein, sowohl Nickbewegungen als auch Rollbewegungen auszulösen, so kann das Schwenklager um eine erste Schwenkachse und um eine zweite Schwenkachse schwenkbar sein, wobei vorzugsweise jede Schwenkachse einen rechten Winkel mit der Rotorachse einschließt. Die erste Rotorachse und die zweite Rotorachse können einen rechten Winkel miteinander einschließen. Das Schwenklager kann beispielsweise als kardanische Aufhängung oder als Kugelgelenk gestaltet sein. Möglich sind auch andere Arten der Lagerung, die diese Bewegungen ermöglichen. Mit einem Antrieb, der sowohl Nickbewegungen als auch Rollbewegungen auslösen kann, kann ein Fluggerät in beliebige Richtungen gesteuert werden.

Der Aktor kann so ausgelegt sein, dass er eine Schwenkbewegung der Rotorachse um eine Schwenkachse antreiben kann. Die betreffende Schwenkachse kann beispielsweise einer Längsachse oder einer Querachse des Helikopters entsprechen. Der erfindungsgemäße Helikopter-Antrieb kann einen ersten Aktor und einem zweiten Aktor umfassen, wobei die Aktoren so angeordnet sind, dass sie Schwenkbewegungen der Rotorachse um unterschiedliche Schwenkachsen antreiben können. Beispielsweise kann ein erster Aktor eine Schwenkbewegung um eine Querachse des Fluggeräts und ein zweiter Aktor eine Schwenkbewegung um eine Längsachse des Fluggeräts antreiben.

Während Schwenkbewegungen der Rotorachse relativ zu dem Rahmen zugelassen werden, sind Drehbewegungen der Rotorachse um die Hochachse relativ zu dem Rahmen unerwünscht. Der Helikopter-Antrieb kann deswegen eine Drehmomentstütze zwischen dem Rahmen und der Rotorachse umfassen, die solche Drehbewegungen verhindert.

Die Drehmomentstütze kann mit dem Schwenklager eine bauliche Einheit bilden. Beispielsweise kann das Schwenklager ein kugelförmiges Gelenkteil umfassen, das in einem Lagerträger geführt ist, so dass das Kugelteil sich in dem Lagerträger drehen kann, während translatorische Bewegungen des Kugelteils relativ zu dem Lagerträger ausgeschlossen sind. Die Drehmomentstütze kann einen Stift umfassen, der sich ausgehend von dem Kugelteil in eine Ausnehmung des Lagerträgers erstreckt und Drehbewegungen um die Rotorachse sperrt. Um die Reibung gering zu halten, kann auf dem Stift eine dünne Rolle angeordnet sein. Andere Drehbewegungen zwischen dem Kugelteil und dem Lagerträger bleiben möglich. Ein solches Schwenklager hat eigenständigen erfinderischen Gehalt, auch ohne dass es mit den weiteren Merkmalen des Helikopter-Antriebs kombiniert ist.

Der Motor kann mit der Rotorachse verbunden sein, so dass der Motor zusammen mit der Rotorachse geschwenkt wird. Der Motor kann koaxial zu der Rotorachse angeordnet sein, so dass eine direkte Kraftübertragung zwischen dem Motor und dem Rotor möglich ist. Der Motor und der Rotor können auf derselben Seite des Schwenklagers angeordnet sein. Der Aktor für den Antrieb der Schwenkbewegung der Rotorachse kann auf der von dem Rotor aus betrachtet gegenüberliegenden Seite des Schwenklagers an der Rotorachse angreifen.

Der Hebelarm zwischen dem Rotor und der Schwenklagerung kann kürzer sein als der Hebelarm zwischen dem Angriffspunkt des Aktors und dem Schwenklager. Wenn der Rotor sich dreht, entstehen Kreiselkräfte, die stabilisierend auf die Ausrichtung der Rotorachse wirken. Diese Kreiselkräfte müssen überwunden werden, um die Ausrichtung der Rotorachse zu ändern. Der Aktor kann so angeordnet und bemessen sein, dass er eine dafür hinreichende Kraft aufbringen kann. Dies kann insbesondere für den Fall gelten, dass der Rotor sich mit Höchstdrehzahl dreht.

Die von dem Aktor aufzubringende Kraft kann durch einen langen Hebelarm zwischen dem Angriffspunkt an der Rotorachse und dem Schwenklager vermindert werden. Beispielsweise kann der Hebelarm zwischen dem Angriffspunkt des Aktors und dem Schwenklager um 50 % länger sein, vorzugsweise um 100 % länger sein als der Hebelarm zwischen dem Schwenklager und dem Rotor.

Die Erfindung betrifft außerdem ein Fluggerät mit einem solchen Helikopter-Antrieb, wobei der Helikopter-Antrieb dazu ausgelegt ist, dem Fluggerät Auftrieb zu verleihen. Das Fluggerät kann mit einem einzigen erfindungsgemäßen Helikopter-Antrieb ausgestattet sein. Möglich ist auch, dass das Fluggerät mit zwei oder mehr erfindungsgemäßen Helikopter-Antrieben ausgestattet ist. Zusätzlich zu den erfindungsgemäßen Helikopter-Antrieben kann das Fluggerät einen oder mehrere Rotoren umfassen, bei denen die Ausrichtung der Rotorachse nicht verändert werden kann. Alle Rotoren können dazu ausgelegt sein, dem Fluggerät Auftrieb zu verleihen. Insgesamt kann das Fluggerät beispielsweise zwei Rotoren, vier Rotoren, sechs Rotoren oder acht Rotoren oder mehr als acht Rotoren umfassen.

In einer Ausführungsform umfasst das Fluggerät zwei Rotoren, die in einem Normalzustand des Fluggeräts koaxial zueinander angeordnet sind. Normalzustand bedeutet, dass die Rotorachsen der beiden Rotoren parallel zu einer vertikalen Achse des Fluggeräts ausgerichtet sind. Die beiden Rotoren können mit gegensinniger Laufrichtung angetrieben sein, so dass die Drehmomente sich gegenseitig ausgleichen.

Sind zwei Rotoren koaxial übereinander angeordnet, so kann die Wirksamkeit des unteren Rotors durch den Luftstrom des oberen Rotors beeinträchtigt sein. In diesem Zusammenhang ist es von Vorteil, wenn der untere Rotor einen vertikalen Abstand zu dem oberen Rotor hat. Der vertikale Abstand kann beispielsweise wenigstens 20 %, vorzugsweise wenigstens 40 %, weiter vorzugsweise wenigstens 50 % des Rotordurchmessers des oberen Rotors sein. Zusätzlich oder alternativ dazu können die Auswirkungen des Luftstroms des oberen Rotors reduziert werden, indem zwischen dem ersten Rotor und dem zweiten Rotor eines oder mehrere Luftleitbleche angeordnet werden. Die Luftleitbleche können starr mit dem Rahmen verbunden sein.

Der Rahmen des Fluggeräts kann eine Mehrzahl von übereinander angeordneten Installationsebenen umfassen. Die Installationsebenen können parallel zueinander ausgerichtet sein. Eine oder mehrere Installationsebenen können einen rechten Winkel mit der Rotorachse eines Helikopter-Antriebs einschließen, wenn das Fluggerät im Normalzustand ist.

Eine erste Installationsebene kann den Lagerträger des Schwenklagers eines ersten Helikopter-Antriebs tragen. Der Rotor und/oder der Motor des ersten Helikopter-Antriebs können oberhalb der ersten Installationsebene angeordnet sein. Aktoren des ersten Helikopterantriebs können unterhalb der ersten Installationsebene angeordnet sein.

Auf einer zweiten Installationsebene kann der Aktor befestigt sein, der sich zu der Rotorachse des ersten Helikopter-Antriebs erstreckt. Umfasst der erste Helikopter-Antrieb mehr als einen Aktor, so können alle Aktoren sich von der Rotorachse zu der zweiten Installationsebene erstrecken. Die zweite Installationsebene kann unterhalb der ersten Installationsebene angeordnet sein. Insbesondere kann die zweite Installationsebene zwischen zwei zueinander koaxialen Rotoren angeordnet sein.

Eine dritte Installationsebene kann den Lagerträger des Schwenklagers eines zweiten Helikopter-Antriebs tragen. Die dritte Installationsebene und das Schwenklager des zweiten Helikopter-Antriebs können die Merkmale aufweisen, die im Zusammenhang mit der ersten Installationsebene und des ersten Helikopter-Antriebs beschrieben sind. Die dritte Installationsebene kann unterhalb der ersten Installationsebene und/oder unterhalb der zweiten Installationsebene angeordnet sein.

Auf einer vierten Installationsebene können der oder die Aktoren des zweiten Helikopter-Antriebs befestigt sein. Die vierte Installationsebene und die Aktoren können dieselben Merkmale aufweisen, die im Zusammenhang mit der zweiten Installationsebene und des ersten Helikopter-Antriebs beschrieben sind. Die vierte Installationsebene kann unterhalb der ersten Installationsebene, unterhalb der zweiten Installationsebene und/oder unterhalb der dritten Installationsebene angeordnet sein.

Das Fluggerät kann eine Steuereinheit umfassen, die dazu ausgelegt ist, den Motor des ersten Helikopter-Antriebs anzusteuern. Das Ansteuern des Motors kann sich auf die Leistung beziehen, so dass durch das Ansteuern eine Bewegung des Fluggeräts nach oben oder nach unten bewirkt wird. Die Steuereinheit kann zusätzlich oder alternativ dazu ausgelegt sein, den Aktor oder die Aktoren des ersten Helikopter-Antriebs anzusteuern. Durch das Ansteuern kann die Ausrichtung der Rotorachse verändert werden, so dass der Rotor in eine andere Richtung wirkt. Durch Ansteuern der Aktoren kann eine Bewegung des Fluggeräts in eine seitliche Richtung ausgelöst werden.

Die Steuereinheit kann dazu ausgelegt sein, auch einen zweiten Helikopter-Antrieb anzusteuern. Dies kann auf entsprechende Weise wie bei dem ersten Helikopter-Antrieb geschehen. Die Aktoren des ersten Helikopter-Antriebs und die Aktoren des zweiten Helikopter-Antriebs können so angesteuert werden, dass die Rotorachsen sich in dieselbe Richtung neigen. Auf diese Weise kann das Fluggerät in seitliche Richtung bewegt werden, während die vertikale Ausrichtung des Fluggeräts im Wesentlichen erhalten bleibt. Möglich ist auch, die Aktoren des ersten Helikopter-Antriebs und die Aktoren des zweiten Helikopter-Antriebs so anzusteuern, dass die Rotorachsen sich in unterschiedliche Richtungen neigen. Auf diese Weise kann die vertikale Ausrichtung des Fluggeräts eingestellt werden. Das Fluggerät kann in eine seitliche Richtung geneigt werden, kombiniert mit einer Bewegung in seitliche Richtung. Möglich ist auch eine Neigung in seitlicher Richtung, während das Fluggerät an seinem Ort bleibt.

Die Steuereinheit kann als geschlossener Regelkreis ausgestaltet sein. Als Sollgröße kann dem Regelkreis ein bestimmter Flugzustand vorgegeben werden. Das Fluggerät kann einen oder mehrere Sensoren aufweisen, um den Ist-Zustand des Fluggeräts zu erfassen. Zu den Stellgrößen des Regelkreises können die Leistung der Motoren und die Ausrichtung der Rotorachse gehören.

Die vertikale Achse des Fluggeräts kann im Normalzustand des Fluggeräts, in dem die Rotoren koaxial übereinander angeordnet sind, mit der Rotorachse zusammenfallen. Die vertikale Achse kann sich durch den Schwerpunkt des Fluggeräts erstrecken. Für die Gewichtsverteilung ist es günstig, wenn die Steuereinheit nahe der vertikalen Achse des Fluggeräts angeordnet ist.

Damit die von den Rotoren erzeugte Luftströmung möglichst wenig beeinträchtigt wird, kann es von Vorteil sein, wenn die Steuereinheit eine um die vertikale Achse konzentrierte Gestalt hat. Beispielsweise kann die Steuereinheit so gestaltet und angeordnet sein, dass sie nicht über einen gedachten Zylinder hinausragt, dessen Achse mit der vertikalen Achse des Fluggeräts übereinstimmt und dessen Durchmesser kleiner ist als 50 %, vorzugsweise kleiner ist als 30 %, weiter vorzugsweise kleiner ist als 20 % des Rotordurchmessers.

Die Steuereinheit kann bezogen auf die vertikale Dimension zwischen dem ersten Rotor und dem zweiten Rotor angeordnet sein. Die Steuereinheit kann an der zweiten Installationsebene aufgehängt sein. Möglich ist auch eine weitere Zwischenebene zwischen dem ersten Rotor und dem zweiten Rotor, die die Steuereinheit trägt. Alternativ kann die Steuereinheit auch oberhalb des oberen Rotors oder unterhalb des unteren Rotors angeordnet sein.

Der Motor des Helikopter-Antriebs kann ein Elektromotor sein. Möglich sind auch andere Antriebsformen, beispielsweise Verbrennungsmotoren. Zur Versorgung der Elektromotoren kann das Fluggerät mit einer Batterie ausgestattet sein. Günstig für die Gewichtsverteilung ist es, wenn die Batterie nahe der vertikalen Achse des Fluggeräts angeordnet ist. Da Batterien meist ein höheres Gewicht haben, kann es außerdem von Vorteil für die Gewichtsverteilung sein, wenn die Batterie unterhalb des unteren Rotors angeordnet ist. Möglich sind aber auch andere Positionen der Batterie etwa zwischen zwei Rotoren oder oberhalb des oberen Rotors.

Um die Beeinträchtigung der Luftströmung der Rotoren gering zu halten, kann die Batterie eine um die vertikale Achse des Fluggeräts konzentrierte Gestalt haben. Beispielsweise kann die Batterie so gestaltet sein, dass sie nicht über einen gedachten Zylinder hinausragt, dessen Achse mit der vertikalen Achse des Fluggeräts übereinstimmt und dessen Durchmesser kleiner ist als 50 %, vorzugsweise kleiner ist als 30 %, weiter vorzugsweise kleiner ist als 20 % des Rotordurchmessers. Zusätzlich oder alternativ dazu kann der Motor des ersten Helikopter-Antriebs und/oder des zweiten Helikopter-Antriebs so gestaltet sein, dass er nicht über diesen gedachten Zylinder hinausragt.

Die unterhalb des unteren Rotors angeordnete Batterie kann von der vierten Installationsebene getragen werden. Möglich ist auch eine weitere unterhalb des unteren Rotors angeordnete Ebene, die die Batterie trägt. Die weitere Ebene kann unterhalb der vierten Installationsebene angeordnet sein. Die weitere Ebene kann zusätzlich oder alternativ als Transportebene ausgestaltet sein, auf der eine von dem Fluggerät getragene Nutzlast angeordnet werden kann.

Die Installationsebenen sind vorzugsweise so gestaltet, dass sie den Durchtritt eines von den Rotoren erzeugten Luftstroms ermöglichen. Beispielsweise können die Installationsebenen Durchbrechungen aufweisen oder lediglich aus Streben bestehen, die Freiräume zwischen sich einschließen.

Der Rahmen des Fluggeräts kann Streben umfassen, um Installationsebenen bzw. sonstige Ebenen in vertikaler Richtung miteinander zu verbinden. Die Verbindung zwischen den Ebenen kann durch eine Mehrzahl von Streben erfolgen, die über den Umfang des Fluggeräts verteilt sind. Beispielsweise können sechs Streben gleichmäßig über den Umfang verteilt sein.

Die Streben können sich radial außerhalb der Rotoren erstrecken. Auf diese Weise können die Streben zugleich eine Schutzwirkung haben, indem sie verhindern, dass Personen in einen unbeabsichtigten Kontakt zu dem drehenden Rotor geraten. Dies kann insbesondere im Falle eines abstürzenden Fluggeräts von Vorteil sein.

Ein weiteres Mittel, um Personen vor Verletzungen durch das Fluggerät zu schützen, kann eine oberhalb des obersten Rotors angeordnete Schutzabdeckung sein. Die Schutzabdeckung kann so gestaltet sein, dass sie einerseits einen Schutz vor unbeabsichtigter Berührung des Rotors bietet, aber andererseits den Luftstrom des Rotors nur in möglich geringem Umfang beeinträchtigt. Beispielsweise kann die Schutzabdeckung Streben umfassen, die sich oberhalb des oberen Rotors erstrecken.

Das Fluggerät kann ein bemanntes Fluggerät oder ein unbemanntes Fluggerät sein. Im Falle eines bemannten Fluggeräts kann es sich um ein Kleinfluggerät handeln, dessen Leergewicht kleiner ist als 50 kg, vorzugsweise kleiner ist als 20 kg.

Die Erfindung betrifft auch ein Verfahren zum Steuern eines Helikopter-Antriebs, bei dem ein Rotor, der bezogen auf die Rotorachse drehbar gelagert ist, in Drehung versetzt wird, um einem Fluggerät Auftrieb zu verleihen. Die Ausrichtung der Rotorachse relativ zu einem Rahmen des Fluggeräts wird geändert, um das Fluggerät zu steuern.

Das Verfahren kann mit weiteren Merkmalen fortgebildet werden, die im Zusammenhang des erfindungsgemäßen Helikopter-Antriebs oder des erfindungsgemäßen Fluggeräts beschrieben sind. Der Helikopter-Antrieb und das Fluggerät können mit weiteren Merkmalen fortgebildet werden, die im Zusammenhang mit dem erfindungsgemäßen Verfahren beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Schnittdarstellung eines erfindungsgemäßen Fluggeräts;
- Fig. 2:: einen Schnitt entlang Linie A-A in Fig. 1;
- Fig. 3:: ein Schwenkgelenk eines erfindungsgemäßen Helikopter-Antriebs;
- Fig. 4:: einen Schnitt entlang Linie B-B in Fig. 3;
- Fig. 5:: Aktoren eines erfindungsgemäßen Helikopter-Antriebs.

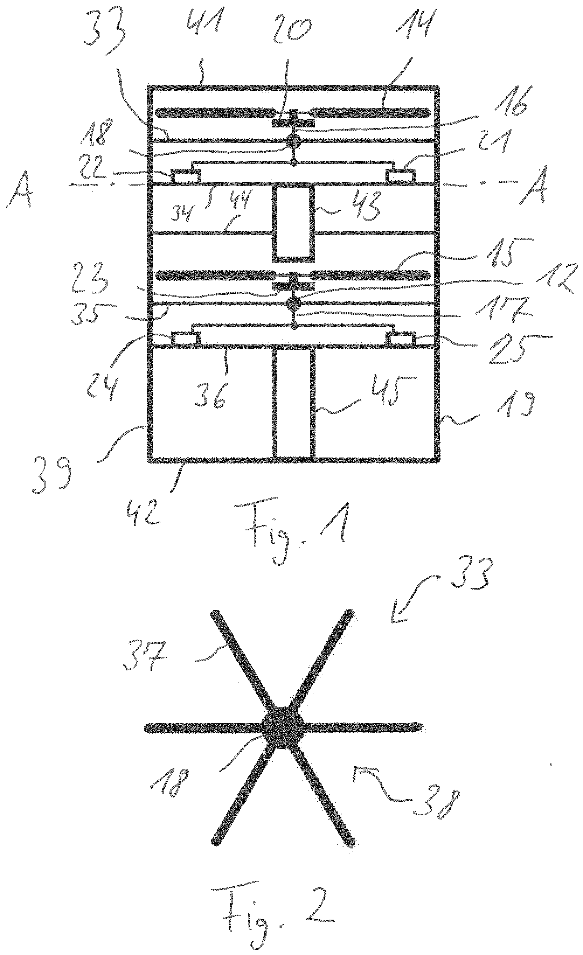

Bei einem in Fig. 1 gezeigten unbemannten Fluggerät ist ein erster Rotor 14 drehbar auf einer Rotorachse 16 gelagert. Die Rotorachse 16 ist über ein Schwenkgelenk 18 an einem Rahmen 19 aufgehängt. Über das Schwenkgelenk 18 kann die Ausrichtung der Rotorachse 16 relativ zu dem Rahmen 19 verändert werden. Ein Motor 20 ist an der Rotorachse 16 aufgehängt, um den ersten Rotor 14 in Drehung zu versetzen. Am unteren Ende der Rotorachse 16 greifen zwei Aktoren 21, 22 an. Durch Betätigen der Aktoren 21, 22 kann das untere Ende der Rotorachse 16 in seitliche Richtung verschoben werden, wodurch sich die Ausrichtung der Rotorachse 16 ändert. Der erste Rotor 14, die Rotorachse 16, der Motor 20 und die Aktoren 21, 22 bilden gemeinsam einen ersten Helikopter-Antrieb im Sinne der Erfindung.

Unterhalb des ersten Helikopter-Antriebs ist ein zweiter erfindungsgemäßer Helikopter-Antrieb angeordnet. Der zweite Helikopter-Antrieb umfasst einen zweiten Rotor 15, eine Rotorachse 17, ein Schwenklager 12, einen Motor 23 sowie zwei Aktoren 24, 25.

In Fig. 1 ist das Fluggerät im Normalzustand gezeigt, in dem die erste Rotorachse 16 und die zweite Rotorachse 17 koaxial zueinander ausgerichtet sind und sich entlang der vertikalen Achse des Fluggeräts erstrecken. Werden im Normalzustand des Fluggeräts die Motoren 20, 23 in Betrieb gesetzt, so dass die Rotoren 14, 15 sich in entgegengesetzte Richtungen drehen, so hebt das Fluggerät senkrecht nach oben vom Boden ab. Die Drehmomente der Rotoren 14, 15 gleichen sich aus, so dass das Fluggerät im Übrigen seine Position beibehält.

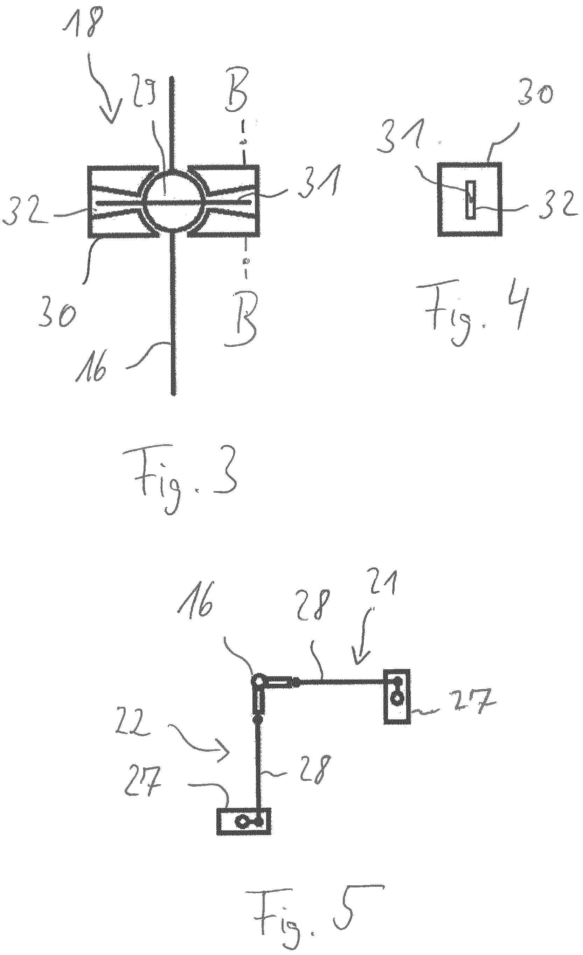

In Fig. 5 sind die Aktoren 21, 22 des ersten Helikopter-Antriebs gezeigt. Jeder Aktor 21, 22 umfasst einen Drehantrieb 27, der über eine Lenkstange 28 an die Rotorachse 16 angeschlossen ist. Die Lenkstangen 28 schließen einen rechten Winkel miteinander ein, so dass die Rotorachse 16 durch geeignete Betätigung der Drehantriebe 27 in beliebige Richtungen geschwenkt werden kann.

Das Schwenkgelenk 18 des Helikopter-Antriebs ist gemäß Fig. 3 als Kugelgelenk ausgebildet, bei dem ein kugelförmiges Gelenkglied 29 in einem Lagerträger 30 geführt ist. Die Rotorachse 16 ist mit dem Gelenkglied 29 verbunden. In dem Lagerträger 30 sind zwei Öffnungen 32 ausgebildet, die sich mit zunehmendem Abstand von dem Drehpunkt des Gelenks aufweiten. In den Öffnungen 32 ist ein mit dem Gelenkglied 29 verbundener Stift 31 geführt. Der Stift 31 und die Öffnungen 32 bilden gemeinsam eine Drehmomentstütze, durch die verhindert wird, dass die Rotorachse 16 sich relativ zu dem Lagerträger 30 um die eigene Achse drehen kann. Hingegen sind Schwenkbewegungen in beliebige Richtungen möglich, indem entweder der Stift 31 sich um seine Achse dreht oder innerhalb der Öffnungen 32 geschwenkt wird.

Der Rahmen 19 des Fluggeräts umfasst eine Mehrzahl von übereinander angeordneten Installationsebenen, die über vertikale Streben miteinander verbunden sind. An einer ersten Installationsebene 33 ist das Schwenklager 18 des ersten Helikopter-Antriebs aufgehängt. Eine zweite Installationsebene 34 trägt die Aktoren 21, 22 des ersten Helikopter-Antriebs. An einer dritten Installationsebene 35 ist das Schwenklager 12 des zweiten Helikopter-Antriebs aufgehängt. Eine vierte Installationsebene 36 trägt die Aktoren 24, 25 des zweiten Helikopter-Antriebs.

Der Aufbau der Installationsebenen ist in Fig. 2 am Beispiel der ersten Installationsebene 33 dargestellt. Von dem zentral angeordneten Schwenklager 18 erstrecken sich sechs Streben 37 radial nach außen, wobei die radiale Erstreckung der Streben 37 etwas größer ist als der Durchmesser des Rotors 14. Zwischen den Streben 37 sind Freiräume 38 ausgebildet, die nach außen hin nicht begrenzt sind. Durch die Freiräume 38 hindurch kann der von dem Rotor 14 erzeugte Luftstrom sich nach unten bewegen. Die weiteren Installationsebenen 34, 35, 36 sind entsprechend aufgebaut. Die Streben 37 aller Installationsebenen 33, 34, 35, 36 haben übereinstimmende Winkelausrichtungen, so dass die Freiräume 38 in einer Projektion entlang der vertikalen Achse des Fluggeräts deckungsgleich übereinanderliegen.

Die äußeren Enden der Streben 37 sind über sechs vertikale Streben 39 miteinander verbunden, die sich über die gesamte Höhe des Fluggeräts erstrecken. Nach oben hin ist der erste Rotor 14 durch eine Schutzabdeckung 41 abgedeckt. Die Schutzabdeckung 41 besteht ebenfalls aus sechs Streben, die in der Mitte miteinander verbunden sind. Am unteren Ende der vertikalen Streben 39 ist eine Transportebene 42 aufgehängt. Auf der Transportebene 42 kann die von dem Fluggerät zu transportierende Nutzlast transportiert werden.

Zwischen dem oberen Helikopter-Antrieb und dem unteren Helikopter-Antrieb ist eine Steuereinheit 43 des Fluggeräts angeordnet. Die Steuereinheit 43 ist an der ersten Installationsebene 34 sowie an einer Zwischenebene 44 aufgehängt. Die Steuereinheit 43 erstreckt sich zylinderförmig entlang der vertikalen Achse des Fluggeräts, wobei die radiale Ausdehnung nicht größer ist als die radiale Ausdehnung der Motoren 20, 23. In dem radial äußeren Bereich, in dem die Rotoren 14, 15 den Hauptauftrieb erzeugen, wird der Luftstrom also nicht durch die Steuereinheit 43 beeinträchtigt.

Unterhalb des unteren Helikopter-Antriebs ist eine Batterie 45 angeordnet, von der die Motoren 20, 23 mit elektrischer Energie versorgt werden. Die Batterie 45 erstreckt sich ebenfalls zylinderförmig entlang der vertikalen Achse des Fluggeräts, wobei die radiale Ausdehnung der der radialen Ausdehnung der Steuereinheit 43 entspricht.

Mit der Steuereinheit 43 werden die Motoren 20, 23 sowie die Aktoren 21, 22, 24, 25 der beiden Helikopter-Antriebe angesteuert. Durch Erhöhen bzw. Vermindern der Drehzahl der Rotoren 14, 15 kann das Fluggerät nach oben bzw. nach unten gesteuert werden. Durch Betätigen der Aktoren 21, 22, 24, 25 können die Rotorachsen 16, 17 geneigt werden, um die Fluglage des Fluggeräts anzupassen oder eine Bewegung des Fluggeräts in seitlicher Richtung zu bewirken. Indem die Drehzahl des oberen Rotors und des unteren Rotors relativ zueinander verändert werden, kann eine Drehung des Fluggeräts um die Hochachse bewirkt werden (Drehmomentverschiebung), ohne dass der Gesamtauftrieb sich verändert (keine Höhenveränderung).

## Patentansprüche

1. Helikopter-Antrieb mit einer Rotorachse (16), die über ein Schwenklager (18) an einem Rahmen (19) aufgehängt ist, mit einem Rotor (14), der bezogen auf die Rotorachse (16) drehbar gelagert ist, mit einem Motor (20), um den Rotor (14) in Drehung zu versetzen, und mit einem Aktor (21, 22), der sich zwischen dem Rahmen (19) und der Rotorachse (16) erstreckt und der dazu ausgelegt ist, die Ausrichtung der Rotorachse (16) zu ändern.

2. Helikopter-Antrieb nach Anspruch 1, **dadurch gekennzeichnet, dass** das Schwenklager (18) als kardanische Aufhängung oder als Kugelgelenk ausgestaltet ist.

3. Helikopter-Antrieb nach Anspruch 1 oder 2, **dadurch gekennzeichnet, dass** das Schwenklager (18) eine zwischen der Rotorachse (16) und dem Rahmen (19) wirkende Drehmomentstütze (31, 32) umfasst.

4. Helikopter-Antrieb nach einem der Ansprüche 1 bis 3, **gekennzeichnet durch** einen ersten Aktor (21), um eine Schwenkbewegung der Rotorachse (16) um eine erste Schwenkachse anzutreiben, und einen zweiten Aktor (22), um eine Schwenkbewegung der Rotorachse (16) um eine zweite Schwenkachse anzutreiben.

5. Helikopter-Antrieb nach einem der Ansprüche 1 bis 4, **dadurch gekennzeichnet, dass** der Motor (20) mit der Rotorachse (16) verbunden ist.

6. Fluggerät mit einem Helikopter-Antrieb nach einem der Ansprüche 1 bis 5, wobei der Helikopter-Antrieb dazu ausgelegt ist, dem Fluggerät Auftrieb zu verleihen.

7. Fluggerät nach Anspruch 6, **gekennzeichnet durch** zwei Rotoren (14, 15), die in einem Normalzustand des Fluggeräts koaxial zueinander ausgerichtet sind.

8. Fluggerät nach Anspruch 7, **dadurch gekennzeichnet, dass** der axiale Abstand zwischen dem ersten Rotor (14) und dem zweiten Rotor (15) wenigstens 20%, vorzugsweise wenigstens 40 %, weiter vorzugsweise wenigstens 50 % des Rotordurchmessers des oberen Rotors (14) entspricht.

9. Fluggerät nach Anspruch 7 oder 8, **dadurch gekennzeichnet, dass** zwischen dem ersten Rotor (14) und dem zweiten Rotor (15) eine Installationsebene (34) des Rahmens (19) angeordnet ist, an der ein Aktor (21, 22) eines Helikopter-Antriebs befestigt ist.

10. Fluggerät nach einem der Ansprüche 6 bis 9, **dadurch gekennzeichnet, dass** eine Steuereinheit, eine Batterie und/oder ein Motor des Helikopterantriebs so angeordnet sind, dass sie nicht über einen gedachten Zylinder hinausragen, dessen Achse mit der vertikalen Achse des Fluggeräts übereinstimmt und dessen Durchmesser kleiner ist als 50 %, vorzugsweise kleiner ist als 30 %, weiter vorzugsweise kleiner ist als 20 % des Rotordurchmessers.

11. Fluggerät nach einem der Ansprüche 6 bis 10, **gekennzeichnet durch** eine Mehrzahl von Installationsebenen (33, 34, 35, 36), die durch Streben (39) miteinander verbunden sind, wobei die Streben (39) sich radial außerhalb der Rotoren (14, 15) erstrecken.

12. Fluggerät nach einem der Ansprüche 6 bis 11, **gekennzeichnet durch** eine oberhalb des obersten Rotors (14) angeordnete Schutzabdeckung (41).

13. Verfahren zum Steuern eines Helikopter-Antriebs, bei dem ein Rotor (14), der bezogen auf die Rotorachse (16) drehbar gelagert ist, in Drehung versetzt wird, um einem Fluggerät Auftrieb zu verleihen, und bei dem die Ausrichtung der Rotorachse (16) relativ zu einem Rahmen (19) des Fluggeräts geändert wird, um das Fluggerät zu steuern.
